# EUROPEAN PATENT SPECIFICATION

(11) **EP 0 970 094 B1**
(45) Date of publication and mention of the grant of the patent: **15.01.2003**
(21) Application number: 98908508.9
(22) Date of filing: 09.02.1998
(51) Int. Cl.: C07F 9/50

(54) **PROCESS FOR PURIFYING NEOMENTHYLDIPHENYLPHOSPHINES USING METHANOL**
VERFAHREN ZUR REINIGUNG VON NEOMENTHYLDIPHENYLPHOSPHINEN MITTELS METHANOL
PROCEDE DE PURIFICATION DES NEOMENTHYLDIPHENYLPHOSPHINES UTILISANT DU METHANOL

(30) Priority: 10.02.1997 US 797067
(43) Date of publication of application: 12.01.2000
(73) Proprietor: ALBEMARLE CORPORATION, Baton Rouge, LA 70801-1780 (US)
(72) Inventor: WU, Tse-Chong, Baton Rouge, LA 70810 (US); SENARATNE, K., Pushpananda, A., Baton Rouge, LA 70808 (US)
(74) Representative: UEXKÜLL & STOLBERG
(86) International application number: US9802520
(87) International publication number: WO98034941

(56) References cited:
- WO-A-97/41131
- GB-A- 1 066 261
- GB-A- 1 295 746
- GB-A- 2 097 795
- MORRISON J D ET AL: "SYNTHESIS OF MENTHYL- AND NEOMENTHYLDIPHENYLPHOSPHINE. EPIMERIC, CHIRAL, TERTIARY PHOSPHINE LIGANDS FOR ASYMMETRIC SYNTHESIS" JOURNAL OF ORGANIC CHEMISTRY, vol. 39, no. 2, 1974, pages 270-272, XP000676372
- AGUIAR A M ET AL: "Stereochemistry of diphenylphosphide displacement at saturated carbon. Conformation and relative reactivity of menthyl- and neomenthyldiphenylphosphine homogeneous hydrogenation complexes" J. ORG. CHEM. (JOCEAH);76; VOL.41 (9); PP.1545-7, TULANE UNIV.;DEP. CHEM.; NEW ORLEANS; LA., XP002065779
- Tanaka et al., "A Novel Route to Menthyldiphenylphosphine", Bull. Chem. Soc. Japan; vol. 8(3), 1975, p.1094

## Description

### TECHNICAL FIELD

This invention relates to recrystallization processes for purifying crude neomenthyldiphenylphosphine.

### BACKGROUND

Methods for the production of air-sensitive phosphines such as, for example, trihydrocarbylphosphines having at least one aryl group and at least one alkyl or cycloalkyl group in the molecule, have been reported in the literature. Prior methods for the purification of reaction products containing desired forms of these phosphines have involved recrystallization in which ethanol was used as a solvent. Processes for synthesis of menthyl- and neomenthyldiphenylphosphine have been described at least in Morrison, J.D., et al., "Synthesis of Menthyl- and Neomenthyldiphenylphosphine. Epimeric Chiral, Tertiary Phosphine Ligands for Asymmetric Synthesis," *J. Org. Chem*., vol. 39, no. 2, 1974, pgs. 270-272. In addition, recrystallization of triorganophosphines or triorganophosphites using methanol is known. See, e.g., GB 2 097 795 A, GB 1 295 746 A, and GB 1 066 261 A.

Tanaka et al., "A Novel Route to Menthyldiphenylphospine", Bull. Chem. Soc. Japan; vol. 8(3), 1975, p. 1094, disclose a route to menthyldiphenylphospine by way of reacting diphenylphosphinous chloride with the Grignard reagent derived from menthyl chloride. The obtained viscous oily substance solidified in several days and was recrystallized from methanol.

However, these previous methods result in purity levels of no greater than 95% as measured by gas chromatography, purity levels which have proven to be inadequate in commercial applications of trihydrocarbylphosphines which are important catalyst components such as, e.g., neomenthyldiphenylphosphine.

Thus, a need exists for a way to produce highly pure (at least 97 mol% as measured by ³¹P NMR analysis) neomenthyldiphenylphosphine. This invention is deemed to fulfill this important need in a surprisingly efficient and effective manner.

### DESCRIPTION OF THE INVENTION

In one embodiment, this invention provides a new, surprisingly effective process for the purification of crude neomenthyldiphenylphosphine, the process comprising crystallizing the crude neomenthyldiphenylphosphine using a solvent consisting essentially of methanol. Preferably, the purity of the crystallized neomenthyldiphenylphosphine is at least 97 mol%, and more preferably at least about 99 mol%, measured by ³¹P NMR analysis. This process reveals that methanol achieves unexpectedly superior results as a crystallization solvent for neomenthyldiphenylphosphine, as compared to results achieved when ethanol is employed as a solvent in the crystallization process.

The neomenthyldiphenylphosphine (also referred to herein as NMDPP) has a purity of at least 97 mol% as measured by ³¹P NMR analysis produced by crystallizing neomenthyldiphenylphosphine having a purity of less than 97 mol% as measured by ³¹P NMR analysis using a solvent consisting essentially of methanol. NMDPP of this invention has a solubility in methanol of less than 2.0% by weight at 25°C and of less than 9.0% by weight at 60°C. In a preferred embodiment, the NMDPP has a purity of at least 99 mol% measured by ³¹P NMR analysis produced by crystallizing NMDPP having a purity of less than 99 mol% measured by ³¹P analysis using a solvent consisting essentially of methanol.

The crude neomenthyldiphenylphosphine used in this invention is typically a mixture comprised of neomenthyldiphenylphosphine and from 2 to 30 weight percent of one or more impurities including oxide derivatives of neomenthyldiphenylphosphine.

The step of crystallization in this invention is conducted using degassed solvent in which the crude neomenthyldiphenylphosphine is dissolved. The purified product is removed from the resulting solution as a crystalline precipitate by heating the solution to a temperature in the range of 40 to 65°C, slowly cooling the solution to form the crystalline precipitate, and then removing the precipitate by filtration. In this way, the impurities substantially remain in solution so that the resulting crystalline precipitate is highly pure. Recrystallization may be employed to achieve even higher levels of purity, if desired. In such cases, the crystallization step is repeated by using the crystalline precipitate of each previous crystallization as the reaction mass for a subsequent crystallization until the desired level of purity is attained.

The solvent used consists essentially of methanol, but may include small amounts of impurities such as, for example, water and ethanol, so long as the impurities do not negatively affect the level of purity attained in the process. The amount of solvent used is typically in the range of 1 to50 mL of solvent per gram of crude neomenthyldiphenylphosphine, although other amounts of solvent may be used, if desired, to optimize the yield of purified NMDPP.

The following comparative examples serve to illustrate this invention, but do not limit it. All parts are by weight unless otherwise indicated.

### Example 1 (Comparative)

Diphenylphosphine (140 g, 0.75 mol) was charged into a 2-L, 3-neck, round-bottom flask in a glove box under a nitrogen atmosphere. The reactor was connected to a nitrogen manifold. Freshly distilled tetrahydrofuran (400 mL) was added to the mixture and the mixture was cooled to -20°C. Normal butyllithium (1.6 M in hexanes, 468 mL, 0.75 mol) was added over a 2 hour period. The cold bath was removed and the orange solution was warmed to room temperature. After stirring at room temperature for 0.5 hour, (-)-menthyl chloride (129 g, 0.74 mol) was added. The mixture was stirred at room temperature for 21 hours and then heated at reflux for 40 hours. The reaction mixture was cooled to room temperature and quenched with H₂O (125 mL). After stirring for 2 hours, the organic layer was separated, washed with H₂O (125 mL) and concentrated to an oil. The resulting material was distilled under vacuum until crystal formation was observed in the distillation condenser to give about 130 g of crude NMDPP in the pot.

Crystallization of the crude NMDPP from ethanol (700 mL) gave a white solid (75 g). Analysis by ³¹P NMR showed 83 mol% NMDPP, 10 mol% NMDPP oxide, and 3 mol% diphenylphosphine oxide. The mother liquor was cooled to -40°C and yielded another 23 g of product. Analysis by ³¹P NMR showed 77 mol% NMDPP, 14 mol% NMDPP oxide, and 4 mol% diphenylphosphine oxide. In this and each of the examples which follow, the ³¹P NMR analysis was conducted using a General Electric QE300 NMR machine set at 121.7 MHz, each sample having been prepared under nitrogen in a glove box.

### Example 2 (Comparative)

NMDPP (85%, 1 g) was chromatographed on silica gel (230-400 mesh, 30 g, eluted with a degassed 20.1 hexanes/EtOAc solvent) in a nitrogen glove box. The solvent was removed under vacuum to give a white solid. Analysis by ³¹P NMR showed 92 mol% NMDPP and 7 mol% NMDPP oxide.

### Example 3

Recrystallization of NMDPP (3 g of 83% pure NMDPP from Example 1) from methanol (degassed, 60 mL) under a nitrogen atmosphere gave a crystalline solid (1.8 g). Analysis by ³¹P NMR showed greater than 99 mol% NMDPP.

### Example 4

In a 2-L, three-necked round-bottom flask, diphenylphosphine (164.9 g, 0.885 mols) was dissolved in degassed THF (500 mL) and cooled to -20°C in a nitrogen glove box. The reactor was connected to a nitrogen manifold. A solution of normal butyllithium in pentane (0.885 mol) was added dropwise to the solution. The cold bath was removed, and the orange colored solution was warmed to room temperature. The solution then was added to a solution of menthyl chloride (0.885 mol) in degassed THF (100 mL) at 60°C. The reaction was refluxed for 60 hours and then cooled. Degassed water (200 ml) was then added and the solution was stirred for 30 minutes. The organic phase was separated and concentrated to a thick oil. The oil was distilled under vacuum until crystal formation was observed in the distillation condenser, and the residue was dissolved in degassed methanol. Upon cooling, NMDPP was precipitated as a white solid. The purity of the precipitate was measured by gas chromatography to be greater than 96 area%.

### Example 5

A solution of menthyl mesylate (22.2 g, 0.095 mol) in tetrahydrofuran (50 mL) was placed in a flame-dried, 3-neck flask fitted with a dropping funnel, condenser, and an over-head stirrer. An equivalent amount of sodium diphenylphosphide in tetrahydrofuran was added and the mixture was heated to reflux for 30 minutes. The mixture was cooled to room temperature and 100 mL of degassed, distilled water was added. After stirring for 20 minutes, the organic layer was separated and stripped to remove the solvent. The resulting crude solid was dissolved in degassed methanol (50 mL) at reflux and cooled to 0°C to precipitate NMDPP as beige crystals. The yield was 80% and the purity by ³¹P NMR analysis was greater than 95 mol%.

In the following examples, the solubility of crude NMDPP in methanol was compared to the solubility of purified NMDPP in methanol.

### Example 6

Solubility was determined for crude NMDPP made in accordance with Example 4 in methanol which was degassed with nitrogen for 2 hours. The solubility tests were carried out under nitrogen in a glove box and the results are set forth in Table 1 below.

**Table 1**

| Temperature, °C | Weight Percent |
|---|---|
| 40.5 | 9.99 |
| 47.8 | 18.35 |
| 50 | 27.74 |
| 56.8 | 49.76 |
| 55.8 | 59.48 |

### Example 7

Solubility of NMDPP purified through crystallization in methanol degassed with nitrogen for 2 hours was measured. The solubility tests were carried out under nitrogen in a glove box and the results are set forth in Table 2 below.

**Table 2**

| Temperature, °C | Weight Percent |
|---|---|
| 8 | 1.00 |
| 25.5 | 1.80 |
| 34.1 | 2.58 |
| 42 | 3.91 |
| 48.7 | 5.21 |
| 52.7 | 6.38 |
| 60.4 | 8.46 |

As may be seen from these examples, an unexpected, surprisingly beneficial result is achieved when methanol is used as a solvent in the crystallization of neomenthyldiphenylphosphine. This purity is exemplified by the substantially reduced solubility of the pure neomenthyldiphenylphosphine in methanol after crystallization as compared to the solubility of the crude neomenthyldiphenylphosphine.

This invention is susceptible to considerable variation in its practice. Therefore the foregoing description is not intended to limit, and should not be construed as limiting, the invention to the particular exemplifications presented hereinabove. Rather, what is intended to be covered is as set forth in the ensuing claims.

## Claims

1. A process for the purification of crude neomenthyldiphenylphosphine, which process comprises cystallizing said crude neomenthyldiphenylphosphine using a solvent consisting essentially of degassed methanol.

2. A process according to claim 1 wherein the crude neomenthyldiphenylphosphine contains from about 2 to about 30 weight percent of one or more impurities including the oxide derivative of neomenthyldiphenylphosphine.

3. A process according to claim 2 wherein the crystallized neomenthyldiphenylphosphine has a purity of at least 97 mole percent as measured by ³¹P NMR.

4. A process according to claim 3 wherein the crystallized neomenthyldiphenylphosphine has a purity of at least 99 mole percent as measured by ³¹P NMR.

5. A process for the purification of crude neomenthyldiphenylphosphine containing from about 2 to about 30 weight percent of one or more impurities including the oxide derivative of neomenthyldiphenylphosphine, which process comprises (i) dissolving said crude neomenthyldiphenylphosphine in a degassed solvent consisting essentially of methanol, (ii) heating the resultant solution to a temperatpre in the range of 40 to 65°C, (iii) slowly cooling the solution to form a crystalline precipitate of purified neomenthyldiphenylphosphine, and (iv) removing from the solution the purified neomenthyldiphenylphosphine.

6. A process according to claim 5 wherein the crystallized neomenthyldiphenylphosphine has a purity of at least 97 mole percent as measured by ³¹P NMR.

7. A process according to claim 6 wherein the crystallized neomenthyldiphenylphosphine has a purity of at least 99 mole percent as measured by ³¹P NMR.

8. A process according to claim 6 wherein the crude neomenthyldiphenylphosphine is produced by (a) reacting sodium diphenylphosphide with menthyl mesylate in tetrahydrofuran to form a reaction mass comprising neomenthyldiphenylphosphine; (b) quenching the reaction mass with water to form a two-phase mixture; and (c) separating and stripping the organic phase of said two-phase mixture to remove the solvent therefrom and to thereby form crude neomenthyldiphenylphosphine as the distillation residue.

9. A process according to claim 8 wherein the water is degassed, distilled water.

10. A process for the purification of crude neomenthyldiphenylphosphine, which process comprises crystallizing said crude neomenthyldiphenylphosphine using a solvent consisting essentially of methanol, wherein the crude neomenthyldiphenylphosphine is produced by (a) reacting diphenylphosphine with n-butyllithium in tetrahydrofuran and then mixing menthyl chloride with the resultant reaction mixture such that the ensuing reaction forms a reaction mass comprising neomenthyldiphenylphosphine; (b) quenching the reaption mass with water to form a two-phase mixture; (c) separating and concentrating the organic phase to form oil; and (d) distilling the oil under vacuum to thereby from the crude neomenthyldiphenylphosphine as the distillation residue.

11. A process according to claim 10 wherein the tetrahydrofuran is degassed tetrahydrofuran.

12. A process according to claim 11 wherein the water is degassed water.

13. A process according to any of claims 10, 11 or 12 wherein the methanol is degassed methanol.

## Patentansprüche

1. Verfahren zur Reinigung von rohem Neomenthyldiphenylphosphin, bei dem das rohe Neomenthyldiphenylphosphin unter Verwendung von Lösungsmittel kristallisiert wird, das im Wesentlichen aus entgastem Methanol besteht.

2. Verfahren nach Anspruch 1, bei dem das rohe Neomenthyldiphenylphosphin etwa 2 bis etwa 30 Gew.% von einer oder mehreren Verunreinigungen einschließlich des Oxidderivats von Neomenthyldiphenylphosphin enthält.

3. Verfahren nach Anspruch 2, bei dem das kristallisierte Neomenthyldiphenylphosphin eine Reinheit von mindestens 97 Mol.% hat, gemessen mittels ³¹P-NMR.

4. Verfahren nach Anspruch 3, bei dem das kristallisierte Neomenthyldiphenylphosphin eine Reinheit von mindestens 99 Mol.% hat, gemessen mittels ³¹P-NMR.

5. Verfahren zur Reinigung von rohem Neomenthyldiphenylphosphin, das etwa 2 bis etwa 30 Gew.% von einer oder mehreren Verunreinigungen einschließlich des Oxidderivats von Neomenthyldiphenylphosphin enthält, bei dem (i) das rohe Neomenthyldiphenylphosphin in entgastem Lösungsmittel aufgelöst wird, das im Wesentlichen aus Methanol besteht, (ii) die resultierende Lösung auf eine Temperatur im Bereich von 40 bis 65°C erwärmt wird, (iii) die Lösung langsam abgekühlt wird, um einen kristallinen Niederschlag aus gereinigtem Neomenthyldiphenylphosphin zu bilden, und (iv) das gereinigte Neomenthyldiphenylphosphin aus der Lösung entfernt wird.

6. Verfahren nach Anspruch 5, bei dem das kristallisierte Neomenthyldiphenylphosphin eine Reinheit von mindestens 97 Mol.% hat, gemessen mittels ³¹P-NMR.

7. Verfahren nach Anspruch 6, bei dem das kristallisierte Neomenthyldiphenylphosphin eine Reinheit von mindestens 99 Mol.% hat, gemessen mittels ³¹P-NMR.

8. Verfahren nach Anspruch 6, bei dem das rohe Neomenthyldiphenylphosphin durch (a) Umsetzen von Natriumdiphenylphosphid mit Menthylmesylat in Tetrahydrofuran, um eine Reaktionsmasse zu bilden, die Neomenthyldiphenylphosphin umfasst, (b) Abschrecken der Reaktionsmasse mit Wasser, um eine Zweiphasenmischung zu bilden, und (c) Abtrennen und Strippen der organischen Phase der Zweiphasenmischung, um das Lösungsmittel aus dieser zu entfernen und dadurch rohes Neomenthyldiphenylphosphin als Destillationsrückstand zu bilden, hergestellt wird.

9. Verfahren nach Anspruch 8, bei dem das Wasser entgastes destilliertes Wasser ist.

10. Verfahren zur Reinigung von rohem Neomenthyldiphenylphosphin, bei dem das rohe Neomenthyldiphenylphosphin unter Verwendung von Lösungsmittel kristallisiert wird, das im Wesentlichen aus Methanol besteht, wobei das rohe Neomenthyldiphenylphosphin hergestellt wird, indem (a) Diphenylphosphin mit n-Butyllithium in Tetrahydrofuran umgesetzt und dann Menthylchlorid mit der resultierenden Reaktionsmischung gemischt wird, so dass die folgende Umsetzung eine Reaktionsmasse bildet, die Neomenthyldiphenylphosphin umfasst, (b) die Reaktionsmasse mit Wasser abgeschreckt wird, um eine Zweiphasenmischung zu bilden, (c) die organische Phase abgetrennt und unter Bildung von Öl konzentriert wird, und (d) das Öl unter Vakuum destilliert wird, um dadurch das rohe Neomenthyldiphenylphosphin als Destillationsrückstand zu bilden.

11. Verfahren nach Anspruch 10, bei dem das Tetrahydrofuran entgastes Tetrahydrofuran ist.

12. Verfahren nach Anspruch 11, bei dem das Wasser entgastes Wasser ist.

13. Verfahren nach einem der Ansprüche 10, 11 oder 12, bei dem das Methanol entgastes Methanol ist.

## Revendications

1. Procédé de purification de néomenthyldiphénylphosphine brute, lequel procédé comprend une cristallisation de ladite néomenthyldiphénylphosphine brute en utilisant un solvant consistant essentiellement en méthanol dégazé.

2. Procédé selon la revendication 1, dans lequel la néomenthyldiphénylphosphine brute contient d'environ 2 à environ 30 pour cent en poids d'une ou plusieurs impuretés comprenant le dérivé oxydé de la néomenthyldiphénylphosphine.

3. Procédé selon la revendication 2, dans lequel la néomenthyldiphénylphosphine cristallisée à une pureté d'au moins 97 moles pour cent d'après mesure par RMN ³¹P.

4. Procédé selon la revendication 3, dans lequel la néomenthyldiphénylphosphine cristallisée à une pureté d'au moins 99 moles pour cent d'après mesure par RMN ³¹P.

5. Procédé de purification de néomenthyldiphénylphosphine brute contenant d'environ 2 à environ 30 pour cent en poids d'une ou plusieurs impuretés comprenant le dérivé oxydé de la néomenthyldiphénylphosphine, lequel procédé comprend (i)
une dissolution de ladite néomenthyldiphénylphosphine brute dans un solvant dégazé consistant essentiellement en méthanol, (ii) un chauffage de la solution résultante à une température de 40 à 65 °C, (iii) un refroidissement lent de la solution pour former un précipité cristallin de néomenthyldiphénylphosphine purifiée, et (iv) une élimination de la néomenthyldiphénylphosphine purifiée de la solution.

6. Procédé selon la revendication 5, dans lequel la néomenthyldiphénylphosphine cristallisée à une pureté d'au moins 97 moles pour cent d'après mesure par RMN ³¹P.

7. Procédé selon la revendication 6, dans lequel la néomenthyldiphénylphosphine cristallisée à une pureté d'au moins 99 moles pour cent d'après mesure par RMN ³¹P.

8. Procédé selon la revendication 6, dans lequel la néomenthyldiphénylphosphine brute est produite (a) en faisant réagir du diphénylphosphure de sodium avec du mésylate de menthyle dans du tétrahydrofuranne pour former une masse réactionnelle comprenant de la néomenthyldiphénylphosphine ; (b) en refroidissant brusquement la masse réactionnelle avec de l'eau pour former un mélange biphasique ; et (c) en séparant et en fractionnant la phase organique dudit mélange biphasique pour éliminer le solvant de celle-ci et former ainsi de la néomenthyldiphénylphosphine brute en tant que le résidu de distillation.

9. Procédé selon la revendication 8, dans lequel l'eau est de l'eau distillée dégazée.

10. Procédé de purification de néomenthyldiphénylphosphine brute, lequel procédé comprend une cristallisation de ladite néomenthyldiphénylphosphine brute en utilisant un solvant consistant essentiellement en méthanol, la néomenthyldiphénylphosphine brute étant produite (a) en faisant réagir de la diphénylphosphine avec du n-butyllithium dans du tétrahydrofuranne et en mélangeant ensuite du chlorure de menthyle avec le mélange réactionnel résultant de telle façon que la réaction subséquente forme une masse réactionnelle comprenant de la néomenthyldiphénylphosphine ; (b) en refroidissant brusquement la masse réactionnelle avec de l'eau pour former un mélange biphasique ; (c) en séparant et en concentrant la phase organique pour former une huile ; et (d) en distillant l'huile sous vide de façon à former la néomenthyldiphénylphosphine brute en tant que le résidu de distillation.

11. Procédé selon la revendication 10, dans lequel le tétrahydrofuranne est du tétrahydrofuranne dégazé.

12. Procédé selon la revendication 11, dans lequel l'eau est de l'eau dégazée.

13. Procédé selon l'une quelconque des revendications 10,11 ou 12, dans lequel le méthanol est du méthanol dégazé.
